(19) **Europäisches Patentamt**

**European Patent Office**

**Office européen des brevets**

(11) **EP 1 645 882 A1**

(12) **EUROPEAN PATENT APPLICATION**

(43) Date of publication:
  **12.04.2006 Bulletin 2006/15**

(51) Int Cl.:
  *G01N 35/00* (2006.01)  *G01N 35/08* (2006.01)
  *B01L 3/00* (2006.01)  *G01N 35/02* (2006.01)

(21) Application number: **05021543.3**

(22) Date of filing: **30.09.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **Nagaoka, Yoshihiro**<br>  **Chiyoda-ku**<br>  **Tokyo 100-8220 (JP)**<br>• **Yokobayashi, Toshiaki**<br>  **882, Ichige**<br>  **Hitachinaka-shi**<br>  **Ibaraki (JP)** |
| (30) Priority: **01.10.2004 JP 2004289507** | |
| (71) Applicant: **Hitachi High-Technologies Corporation Tokyo (JP)** | (74) Representative: **Beetz & Partner**<br>**Patentanwälte**<br>**Steinsdorfstrasse 10**<br>**D-80538 München (DE)** |

(54) **Chemical analyzer and a structure to be used in the analyzer**

(57)   In a chemical analyzer (1), an accommodation part (12) accommodates a structure (2) that stores a reagent being caused to react with a sample and has a reaction region, in which the sample and the reagent react with each other. Further, a detection mechanism (15) detects the sample after reaction. The structure (2) is formed with a reagent cartridge (20) that stores a reagent, and an analysis cartridge (30) comprising a connection part, to which the reagent cartridge is connected, a reagent flow path, through which the reagent flows, a sample flow path, through which the sample flows, and a reaction region communicated to the reagent flow path and the sample flow path. A side surface of the reagent cartridge (20) and a side surface of the analysis cartridge (30) are arranged in opposite to each other and connected to each other through the connection part.

FIG. 2

**Description**

Background of the Invention

The invention relates to a chemical analyzer. As a method of extracting DNA from liquid sample containing DNA, International Publication WO00/078455 describes a device for performing miniaturized in vitro amplification assay. In this device, DNA mixture is passed through a glass filter as an inorganic substrate, and then washing solution and eluant are passed therethrough and only DNA is recovered. The glass filter is provided on a rotatable structure and reagents such as washing solution, eluant, etc. are held in respective reagent reservoirs in the same structure. A centrifugal force generated upon rotation of the structure causes the respective reagents to flow, and valves provided in minute flow paths, which interconnect between the respective reagent reservoirs and the glass filter, are opened whereby the reagents pass through the glass filter.

As a chemical analyzer that extracts and analyzes a specific chemical substance, such as nucleic acid, etc., from sample containing a plurality of chemical substances, International Publication WO99/033559 describes an integrated fluid manipulation cartridge. In this apparatus, an integrated cartridge comprises therein a capturing component that captures reagents such as a solution, a washing solution, an eluant, etc., and a nucleic acid, and after a sample containing a nucleic acid is injected into the cartridge, the sample and the eluant are mixed with each other and passed through the capturing component, a washing solution is further passed through the capturing component, the eluant is further passed through the capturing component, and the eluant having passed through the capturing component is brought into contact with a PCR reagent to flow to a reaction chamber.

Since all reagent storage parts, reaction parts, etc. are made integral with each other in the configurations described in the publications, however, control according to properties of reagents cannot be adequately performed when respective reagents are to be beforehand stored. Further, in the device described in the International Publication WO00/078455, wax, etc., which melt when heated is used for the valves and therefore there is possibility that the reagents having passed remain in the valves to contaminate the recovered DNA. That is, there is possibility that the DNA mixture and the washing solution remain in the valves and flow in a process, in which the eluant is made to pass through the glass filter by centrifugal force.

Further, in the integrated fluid manipulation cartridge described in the International Publication WO99/033559, reagents are passed through capturing components by opening valves provided in the minute flow paths, which interconnect between the respective reagent chambers and the capturing components, when the respective reagents are fed with a pump. Further, valves or the like provided between the capturing components and the respective chambers are changed over so that out of the reagents having passed through the capturing components, the washing solution flows to a waste-liquid chamber and the eluant flows to a reaction chamber. In case of feeding a plurality of reagents with the pump, the reagents remain on walls of a flow path, and particularly, liquids are liable to remain when there are obstacles such as valves and the like. Once the liquids remain, they do not flow, and therefore there is possibility of contamination at those parts, at which the liquids join other reagents. Further, in case that the washing solution and the eluant, which have passed through the capturing components, are switched over by valves, etc. to flow to separate chambers, the washing solution having earlier flowed to the waste-liquid chamber contaminates flow paths upstream of the valves, etc., for switchover to the reaction chamber, so that there is a fear of mixing of the washing solution with the eluant.

Brief Summary of the Invention

Hereupon, it is an object of the invention to provide a simple chemical analyzer that can solve at least one of the problems described above and highly and accurately extracts and detects a specific chemical substance contained in a liquid sample.

The problems are solved by providing the following configuration, for example.

(1) A chemical analyzer comprising an accommodation part that accommodates a structure, into which a sample is injected and a reagent is stored, and which has a reaction region, in which the sample and the reagent react with each other, and a detection mechanism for the sample after the reaction, and wherein the structure comprises a reagent cartridge provided with a reagent storage part that stores the reagent and an analysis cartridge comprising a connection part, to which the reagent cartridge is connected, a reagent flow path, through which the reagent flows, a sample flow path, through which the sample flows, and the reaction region communicated to the reagent flow path and the sample flow path, and wherein the reagent cartridge and the analysis cartridge are structured so that they can be connected to each other through the connection part in a state a side surface of the reagent cartridge and a side surface of the analysis cartridge are arranged in opposite to each other.

Thereby, even in the case where various reagents are to be beforehand stored, it is possible to adequately perform control conformed to properties of the reagents. Also, it is possible to form an effective flow of a sample or a reagent. Also, it is possible to restrict the cartridges in height and to restrict a height of the accommodation part, which accommodates the cartridges, to a further small magnitude.

For example, an inner peripheral side surface of the analysis cartridge is opposite to an outer peripheral side surface of the reagent cartridge. Specifically, it is preferable that a side of the analysis cartridge facing toward a center of rotation and an outer peripheral side of the reagent cartridge facing away from the center of rotation be formed to be opposite to each other at the connection part. In addition, in the case where a plurality of reagent cartridges are provided, it is preferable that outer peripheral side surfaces of the respective reagent cartridges be formed to be opposite to the analysis cartridge. It is preferable that a cross sectional area of the reagent flow path of the analysis cartridge at the connection part be larger than that of the reagent cartridge. Further, for example, the structure is rotatably mounted on the accommodation part, the sample contains a nucleic acid, the analysis cartridge comprises a capturing part that captures the nucleic acid in the sample, and the detection mechanism is arranged outside the structure.

Alternatively, in a chemical analyzer, the structure is rotatably mounted on the accommodation part and comprises a reagent cartridge provided with a reagent storage part that stores a reagent, and an analysis cartridge comprising a connection part, to which the reagent cartridge is connected, a reagent flow path, through which the reagent flows, a sample flow path, through which the sample flows, and a reaction region communicated to the reagent flow path and the sample flow path, and the reagent cartridge and the analysis cartridge comprise a plurality of side surfaces closer to a direction along a direction of rotation than to a direction perpendicular to the direction of rotation, one out of the side surfaces is formed in a position closer to the center of rotation than the other side surfaces are.

Thereby, it is possible to improve the cartridges in stability, thus enabling conducting an accurate analysis in the analyzer. Specifically, for example, a side of the analysis cartridge facing toward the center of rotation and an outer peripheral side of the reagent cartridge facing away from the center of rotation fit together at the connection part.

Alternatively, in the chemical analyzer (1), it is characterized in that the structure is rotatably mounted on the accommodation part and an angular speed of rotation causing to flow out the reagent in the reagent storage part closer to the center of rotation is larger than an angular speed of rotation causing to flow out the reagent in the reagent storage part far away from the center of rotation in the reagent cartridge.

Alternatively, in the chemical analyzer (1), it is characterized in that the reagent cartridge comprises a plurality of reagent storage vessels , flow paths communicating between the reagent storage vessels and ends of the reagent cartridge, a first reagent storage vessel, a first flow path communicated to the first reagent storage vessel and a first end of the reagent cartridge, a second reagent storage vessel, and a second flow path communicated to the second reagent storage vessel and a second end of the reagent cartridge, and the analysis cartridge is formed so as to form a space, in which a reagent in the first reagent storage vessel and a reagent in the second reagent storage vessel are communicated through the reagent flow path of the analysis cartridge to each other in a state, in which the reagent cartridge and the analysis cartridge are connected to each other. It is preferable that in the case where the reagent storage part is configured to be valveless, the plurality of reagent storage vessels be formed to be communicated to one another through the reagent flow path of the analysis cartridge by connecting the reagent cartridge to the analysis cartridge.

Also, in the chemical analyzer, it is characterized in that the structure is rotatably mounted on the accommodation part and the reagent cartridge or the analysis cartridge is formed so that a plurality of side surfaces thereof are arranged along a direction close to a direction of rotation rather than a direction perpendicular to the direction of rotation, and one of the side surfaces is formed to be closer to the center of rotation than the other of the side surfaces. Thereby, in addition to the action described above, it is possible to improve connection of the cartridges in stability and to ensure stable flow of liquid even in the case where control at high speed rotation is performed. Therefore, it is possible to make an accurate measurement.

Also, it is preferable to further have the following configuration. Any one of the configurations described above has a feature in that a plurality of the reagent cartridges are provided, and a first reagent cartridge is accommodated in the accommodation part after being held at a lower temperature than that, at which a second reagent cartridge is. Also, it is more preferable that the first reagent cartridge is smaller in volume than the second reagent cartridge. It is preferable in any one of the configurations described above that the analysis cartridge is provided with a reagent storage part that stores a reagent and the analysis cartridge is accommodated in the accommodation part after being held at a lower temperature than that, at which the reagent cartridge is. It is preferable in any one of the configurations described above that a plurality of the reagent cartridges is provided, a first reagent cartridge is arranged in opposite to a first region of the analysis cartridge, and a second reagent cartridge is arranged in opposite to a second region of the analysis cartridge.

Also, the structure preferably has the following configurations.

A structure for chemical analysis, comprises an introduction part for a sample containing a specific chemical substance, a reagent storage part that stores a reagent to be caused to react with the sample, and a capturing part that captures the chemical substance from the sample having been caused to react with the reagent, the structure further comprises a reagent cartridges provided with a reagent storage part that stores a plurality of reagents, and an analysis cartridges comprising a connection part, to which the reagent cartridge is connectable, a reagent flow path, through which the reagent flows, a sample flow path, through which the sample flows, and a reaction region, to which the reagent flow path and the sample flow path are communicated, and a side surface of the reagent cartridge and a side surface of the analysis cartridge are formed to be connectable through the connection part in a state of being arranged in opposite to each other.

Specifically, a flow path structure comprises a connection part connectable to a reagent structure provided with a reagent storage part that stores a reagent, a reagent flow path, through which the reagent supplied through the connection part flows, a sample flow path, through which a sample containing a specific chemical substance flows, and a reaction region, to which the reagent flow path and the sample flow path are communicated, and a capturing part that captures the chemical substance in the sample having been caused to react with the reagent, and the connection part is formed to be connectable in a state, in which a side surface thereof and a side surface of the reagent structure are arranged in opposite to each other.

Further, provided as a specific example is a flow path structure comprising a connection part constructed to be connectable to a reagent structure provided with a reagent storage part that stores a reagent and supplied with a reagent from the reagent storage part, an injection port, through which a sample containing a specific chemical substance is injected, a separation part, in which a separated sample containing a nucleic acid being an object for analysis is separated from a sample injected from the injection port, a first reaction part, in which a first reagent supplied from a first connection part and the separated sample are introduced to react together, a nucleic acid capturing part that captures the nucleic acid from the separated sample having reacted, a washing reagent flow path, through which a washing reagent supplied from a second connection part is conducted to the nucleic acid capturing part, an elution reagent flow path, through which an elution reagent supplied from a third connection part is conducted to the nucleic acid capturing part, and a holding part that holds the nucleic acid as eluted, and wherein the connection part is formed to be connectable in a state, in which a side surface thereof and a side surface of the reagent structure are arranged in opposite to each other.

Alternatively, a reagent structure comprises: a connection part formed to be connectable to a flow path structure comprising a reagent flow path, through which a reagent flows down, a sample flow path, through which a sample containing a specific chemical substance flows down, and a reaction region, to which the reagent flow path and the sample flow path are communicated; a reagent storage part that stores the reagent; a flow path, through which the stored reagent is conducted to the flow path structure, and the connection part is formed to be connectable in a state, in which a side surface thereof and a side surface of the flow path structure are arranged in opposite to each other.

According to the invention, it is possible to provide a chemical analyzer making use of a reagent cartridge, in which a reagent or the like is beforehand stored, and a analysis cartridge formed with a flow path to effectively conduct analysis of high performance.

Other objects, features and advantages of the invention will become apparent from the following description of the embodiments of the invention taken in conjunction with the accompanying drawings.

Brief Description of the Several Views of the Drawing

Figs. 1 to 6 are views of an embodiment of a gene analyzer according to the invention and its parts, Fig. 1 being a perspective view of the gene analyzer, Fig. 2 being a perspective view of an examination module, Fig. 3 being a perspective view of a reagent cartridge, Fig. 4 being a perspective view of an analysis cartridge, and Figs. 5 and 6 being cross sectional views of the reagent cartridge and the analyis cartridge;
Fig. 7 is a flowchart illustrating manipulation procedure for the gene analyzer;
Fig. 8 is a flowchart illustrating operation in the gene analyzer;
Fig. 9 is a view illustrating operating procedure in the gene examination apparatus; and
Figs. 10 to 21 are views illustrating processing operations in the reagent cartridge and the analysis cartridge.

Detailed Description of the Invention

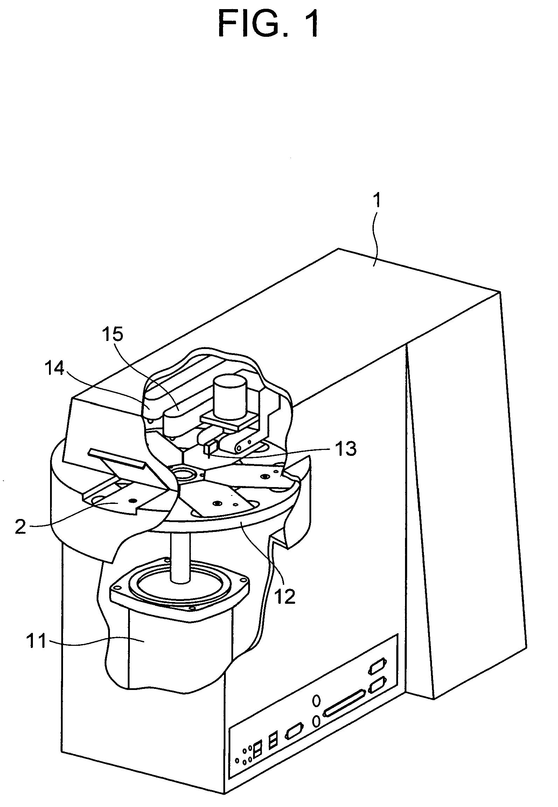

An embodiment of a gene analyzer according to the invention will be described with reference to Figs. 1 to 19. Fig. 1 is a view showing a whole construction of the gene analyzer according to the invention. The gene analyzer 1 comprises a holding disk 12 rotatably supported by a motor 11, a plurality of analysis modules 2 arranged on the holding disk 12, a perforator 13 that controls flow of liquid, a heating device 14, and a detection device 15. An operator prepares an analysis module 2 every analysis item to mount the same on the holding disk 12 and starts the gene analyzer 1.

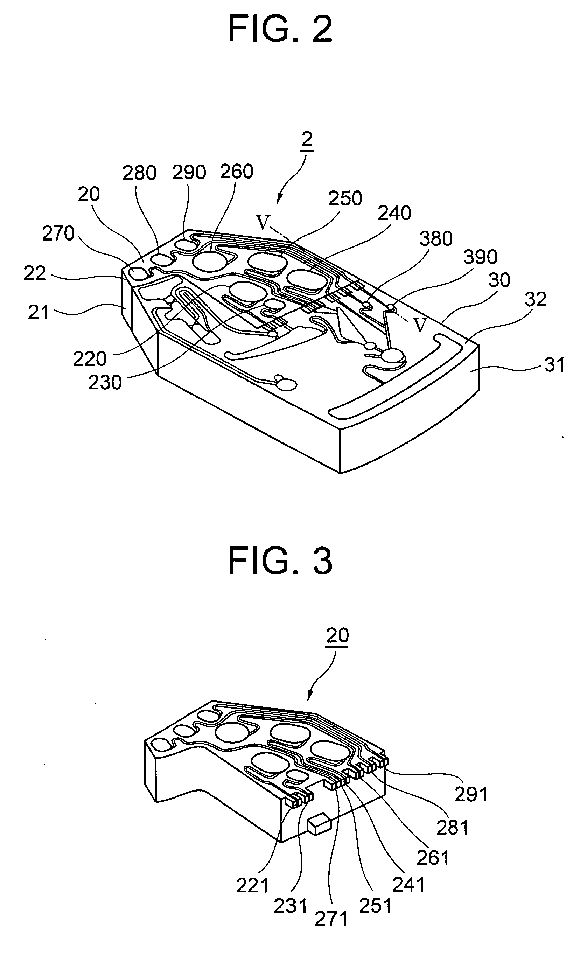

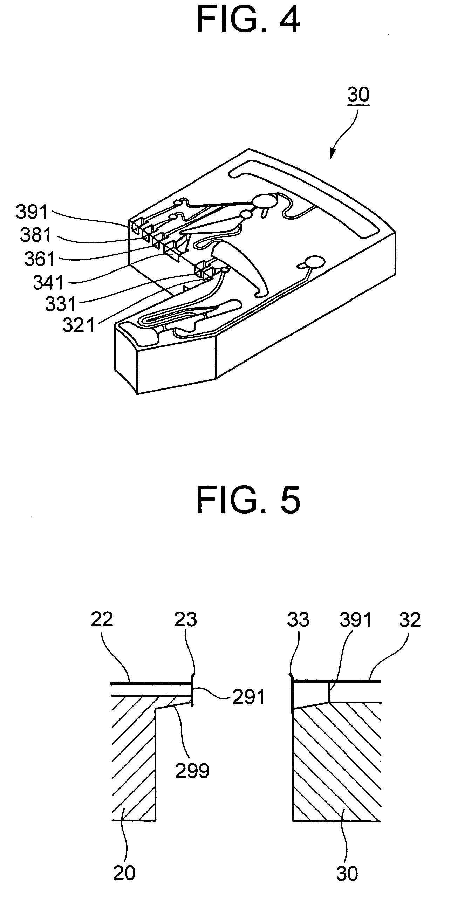

Fig. 2 is a view showing construction of the analysis module 2. The analysis module 2 is constructed such that a reagent cartridge 20, in which a transparent reagent cartridge cover 22 is joined to a reagent cartridge body 21, is mounted to an analysis cartridge 30, in which a transparent analysis cartridge cover 32 is joined to an examination cartridge body 31. Respective reagents are beforehand dispensed to respective reagent vessels 220, 230, 240, 250, 260, 270, 280, 290 by predetermined amounts. The reagent cartridge 20 is provided on a side (Fig. 3) thereof with reagent outlets 221, 231, 241, 251, 261, 271, 281, 291, which are communicated to the respective reagent vessels and connected to respective reagent inlets 321, 331, 341, 361, 381, 391 of the analysis cartridge 30 shown in Fig. 4 upon mounting of the reagent cartridge 20 to the analysis cartridge 30. In the embodiment, the reagent outlets 241, 251, 271 are connected together to the reagent inlet 341. When the reagent cartridge 20 is mounted to the analysis cartridge 30, the respective reagent vessels are communicated through the respective reagent outlets and the respective corresponding reagent inlets to one another in the examination cartridge 30.

In this manner, the gene analyzer according to the embodiment comprises an accommodation part that accommodates the analysis modules 2 being a structure, in which a sample is injected, reagents are stored, and which comprises a reaction region, in which the sample and the reagents react with each other, and the detection device 15 that detects the sample after reaction. The analysis module 2 comprises the reagent cartridge 20 provided with a reagent storage part that stores the reagents, and the analysis cartridge 30 constituting a analysis cartridge that comprises a connection part, to which the reagent cartridge is connected, reagent flow paths, through which the reagents flow, a sample flow path, through which the sample flows, and the reaction region communicated to the reagent flow paths and the sample flow path, and a side surface of the reagent cartridge 20 and a side surface of the analysis cartridge 30 are formed to be connectable together through the connection part in a state of being arranged in opposite to each other.

Thereby, even in the case where various reagents are beforehand stored, it is possible to adequately conduct control conformed to properties of the reagents. Also, it is possible to form an effective flow of a sample or reagents. Also, it is possible to restrict the cartridges in height and to restrict a height of the accommodation part, which accommodates the cartridges, to a further small magnitude.

For example, an inner peripheral side surface of the analysis cartridge 30 is opposite to an outer peripheral side surface of the reagent cartridge 20. Specifically, it is preferable that a side surface of the analysis cartridge 30 facing toward a center of rotation and a side surface of the reagent cartridge 20 facing away from the center of rotation be formed to be opposite to each other at the connection part. In addition, in the case where a plurality of reagent cartridges are provided, it is preferable that side surfaces of the respective reagent cartridges 20 facing away from the center of rotation be formed to be opposite to the analysis cartridge 30. Also, it is preferable that a reagent flow path of the analysis cartridge 30 at the connection part be larger in cross sectional area than those of the reagent cartridges 20. Further, for example, the analysis module 2 is rotatably mounted on the accommodation part, the sample contains a nucleic acid, the analysis cartridge 30 comprises a capturing part that captures the nucleic acid in the sample, and the detection mechanism is arranged outside the analysis module 2.

Alternatively, the analysis module 2 is rotatably mounted on the accommodation part and comprises a reagent cartridge 20 provided with a reagent storage part that stores a reagent, and an analysis cartridge 30 comprising a connection part, to which the reagent cartridge 20 is connected, a reagent flow path, through which the reagent flows, a sample flow path, through which a sample flows, and a reaction region communicated to the reagent flow path and the sample flow path, and the reagent cartridge 20 and the analysis cartridge 30 comprise a plurality of side surfaces closer to a direction along a direction of rotation than to a direction perpendicular to the direction of rotation, and one out of the side surfaces is formed in a position closer to the center of rotation than the other side surfaces are.

Thereby, it is possible to improve the cartridges in stability, thus enabling conducting an accurate analysis in the analyzer. Specifically, a configuration is preferable, in which, for example, a side surface of the analysis cartridge 30 facing toward the center of rotation and a side surface of the reagent cartridge 20 facing away from the center of rotation fit together at the connection part. Alternatively, the structure is rotatably mounted on the accommodation part and constructed such that a rotating speed for causing a reagent in the reagent storage part closer the center of rotation to flow out is larger than a rotating speed for causing a reagent in the reagent storage part far away from the center of rotation to flow out, within the reagent cartridge 20.

Alternatively, it is preferable that the reagent cartridge 20 comprise a plurality of reagent storage vessels, flow paths for communication between the reagent storage vessels and an end of the reagent cartridge 20, a first reagent storage vessel, a first flow path communicated to the first reagent storage vessel and a first end of the reagent cartridge 20, a second reagent storage vessel, and a second flow path communicated to the second reagent storage vessel and a second end of the reagent cartridge 20, and the analysis cartridge 30 be formed so as to form a space, in which a reagent in the first reagent storage vessel and a reagent in the second reagent storage vessel are communicated through the reagent flow path of the analysis cartridge 30 to each other in a state, in which the reagent cartridge 20 and the analysis cartridge 30 are connected together. In addition, it is preferable that in the case where the reagent storage part is configured to be valveless, a plurality of the reagent storage parts be formed to be communicated to one another through the reagent flow path of the analysis cartridge 30 by connecting the reagent cartridge 20 to the analysis cartridge 30.

Alternatively, it is preferable that the analysis module 2 be rotatably mounted on the accommodation part, and the reagent cartridge 20 or the analysis cartridge 30 be formed so that side surfaces thereof are arranged along a direction closer to a direction of rotation rather than a direction perpendicular to the direction of rotation, and one of the side surfaces be formed to be closer to the center of rotation than the other side surfaces are. Thereby, in addition to the action described above, it is possible to improve connection of the cartridges in stability and to ensure stable flow of liquid even in the case where control at high speed rotation is performed. Therefore, it is possible to make an accurate measurement.

Also, further, it is preferable to adopt the following configurations.

A plurality of the reagent cartridges 20 are provided, and a first reagent cartridge is accommodated in the accommodation part after being held at a lower temperature than that, at which a second reagent cartridge is. More preferably, the first reagent cartridge is made smaller in volume than the second reagent cartridge. Also, it is preferable that the analysis cartridge provided with a reagent storage part that stores a reagent be accommodated in the accommodation part after being held at a lower temperature than that, at which the reagent cartridge 20 is.

It is preferable in either of the above described configurations that a plurality of the reagent cartridges 20 be provided, a first reagent cartridge be arranged in opposite to a first region of the analysis cartridge 30, and a second reagent cartridge be arranged in opposite to a second region of the analysis cartridge.

Also, as the analysis module 2 which is the structure, it is preferable to have the following configurations. The analysis module 2 for chemical analysis comprises an introduction part for sample containing a specific chemical substance, a reagent storage part that stores reagent being caused to react with the sample, and a capturing part that captures the chemical substance from the sample having been caused to react with the reagent, the analysis module 2 comprises a reagent cartridges 20 provided with a reagent storage part that stores a plurality of reagents, and an analysis cartridge 30 comprising a connection part, to which the reagent cartridge 20 is connectable, a reagent flow path, through which the reagents flow, a sample flow path, through which the sample flows, and a reaction region, to which the reagent flow path and the sample flow path are communicated, a side surface of the reagent cartridge and a side surface of the analysis cartridge 30 are formed to be connectable together through the connection part in a state of being arranged in opposite to each other.

Specifically, the analysis cartridge comprises a connection part connectable to the reagent cartridge 20 provided with a reagent storage part that stores a reagent, a reagent flow path, through which the reagent supplied through the connection part flows, a sample flow path, through which a sample containing a specific chemical substance flows, and a reaction region, to which the reagent flow path and the sample flow path are communicated, and a capturing part that captures the chemical substance in the sample having reacted with the reagent, the connection part being formed to be connectable in a state, in which a side surface thereof and a side surface of the reagent structure are arranged in opposite to each other.

As a further specific example, the analysis cartridge 30 is characterized by comprising connection parts constructed to be connectable to the reagent cartridge 20 provided with a reagent storage part that stores a reagent and supplied with a reagent in the reagent storage part, an injection port, through which a sample containing a specific chemical substance is injected, a separation part, in which a separation sample containing a gene being an object for analysis is separated from a sample injected from the injection port, a first reaction part, in which a first reagent supplied from a first connection part and the separated sample are introduced to react together, a gene capturing part that captures the gene from the separated sample having reacted, a washing solution flow path, through which a washing solution supplied from a second connection part is conducted to the gene capturing part, an elution reagent flow path, through which an elution reagent supplied from a third connection part is conducted to the gene capturing part, and a holding part that holds the gene as eluted, the connection parts being formed to be connectable in a state, in which a side surface thereof and a side surface of the reagent structure are arranged in opposite to each other.

Alternatively, the reagent cartridge 20 is characterized by comprising: a connection part formed to be connectable to an analysis cartridge 30 comprising a reagent flow path, through which a reagent flows down, a sample flow path, through which a sample containing a specific chemical substance flows down, and the reaction region, to which the reagent flow path and the sample flow path are communicated; a reagent storage part that stores the reagent; and a flow path, through which the stored reagent is conducted to the flow path structure, the connection part being formed to be connectable in a state, in which a side surface thereof and a side surface of the flow path structure are arranged in opposite to each other.

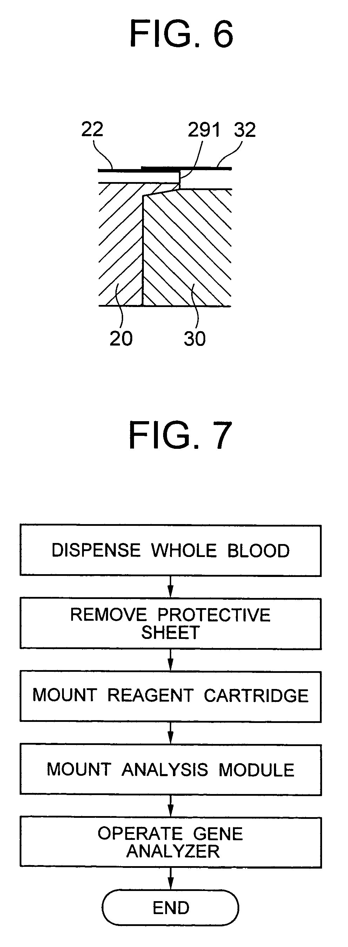

Fig. 6 is a vertical, cross sectional view of the connection part of the reagent cartridge 20 and the analysis cartridge 30, taken along the line V-V in Fig. 2, Fig. 5 is a vertical, cross sectional view of the connection part of the reagent cartridge 20 and the analysis cartridge 30, taken along the line V-V in Fig. 2, before connected. A reagent-cartridge protective sheet 23 is adhered to the connection part of the reagent cartridge 20 in order to prevent leakage and vaporization of a reagent beforehand stored in the reagent cartridge 20. Also, an analysis-cartridge protective sheet 33 is adhered to the connection part of the analysis cartridge 30 in order to prevent contamination within the analysis cartridge 30.

An operator peels off the reagent-cartridge protective sheet 23 and the analysis-cartridge protective sheet 33 and mounts the reagent cartridge 20 to the analysis cartridge 30. A projection (for example, 299 in Fig. 5) defining a reagent outlet fits to a reagent inlet whereby the both cartridges are positioned and leakage of a reagent outside the analysis cartridge is eliminated. Alternatively, an adhesive may be applied to the analysis cartridge cover 32, to which the analysis-cartridge protective sheet is adhered, to permit adhesion of a joint surface of the reagent cartridge to prevent leakage of a reagent. In addition, the projection (for example, 299 in Fig. 5) provided on the reagent cartridge may be provided on a side of the analysis cartridge. In this manner, a feature resides in the provision of a concave-convex structure.

A feature resides in that the reagent cartridge 20 comprises a projection provided with a flow path, which is communicated to a reagent vessel, and the analysis cartridge comprises a concave inlet that accommodates the projection and is provided with a flow path, which corresponds to the flow path. In addition, the projection and the inlet may constitute a combination, in which they are formed in opposite cartridges. The projection is desirably configured to extend laterally.

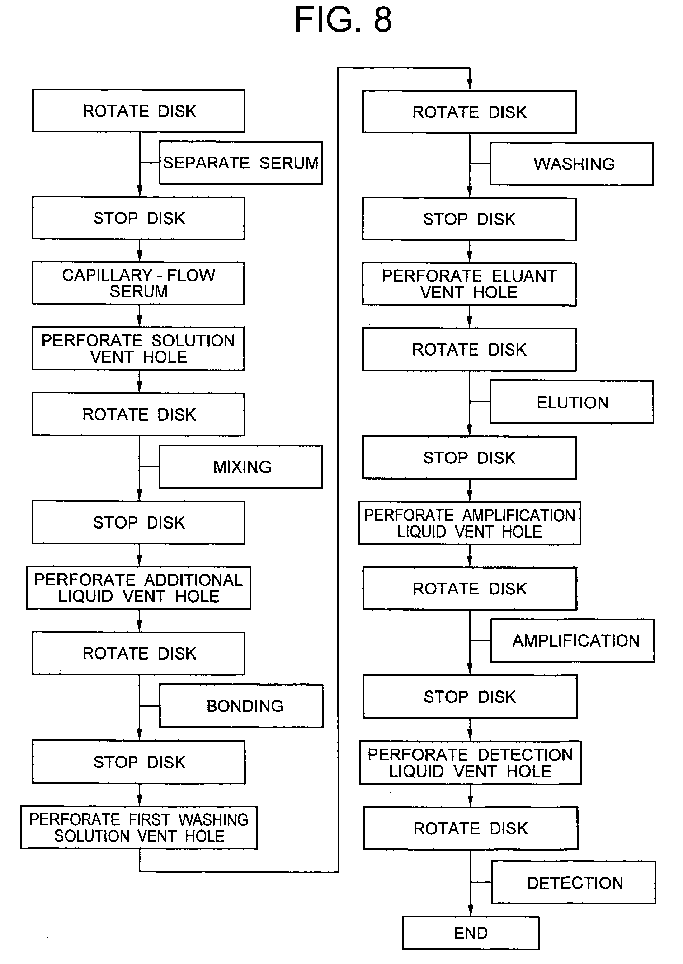

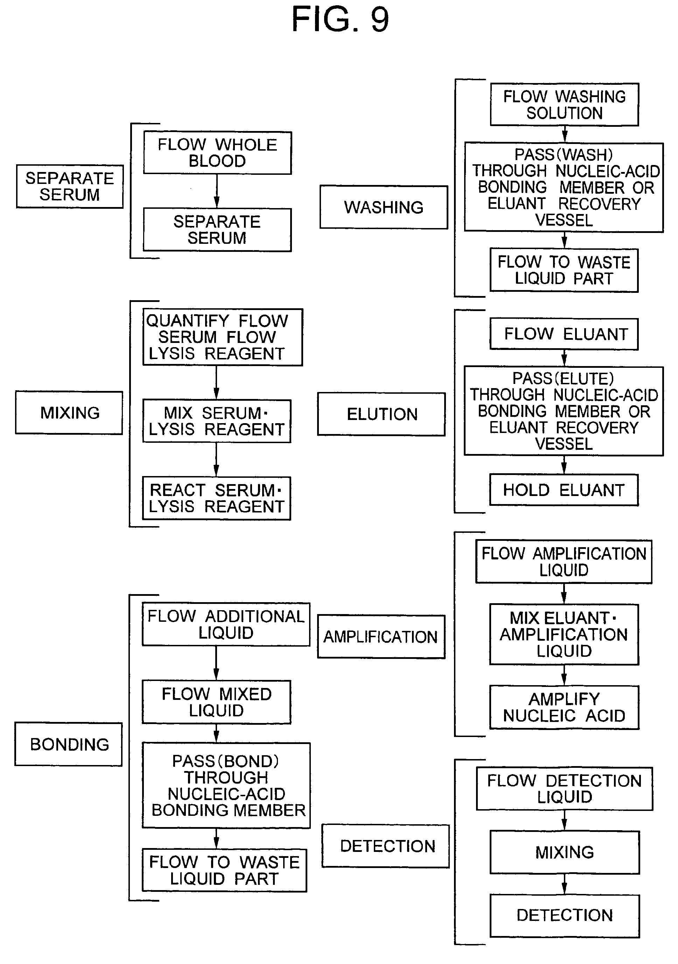

An operations of extraction and analysis of a virus nucleic acid in the case where whole blood is used as a sample are described hereinafter. Fig. 7 shows the operating procedure of the gene analyzer according to the invention operated by an operator, and Figs. 8 and 9 show the procedure of operations in the gene analyzer.

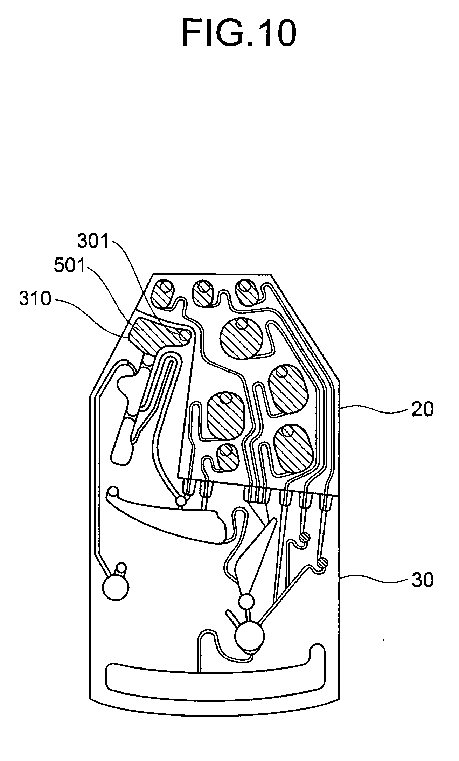

An operator injects whole blood, which is drawn by a vacuum blood-collecting vessel, etc., into a sample vessel 310 through a sample injection port 301 (Fig. 10) of the analysis cartridge 30, peels off the reagent-cartridge protective sheet 23 and the analysis-cartridge protective sheet 33, which are shown in Fig. 5, and then mounts the reagent cartridge 20 to the analysis cartridge 30 (Fig. 2).

When a necessary number of analysis modules 2 as assembled are mounted on the holding disk 12 and the gene analyzer 1 is operated, a gene of the virus is extracted from whole blood and a gene is finally detected.

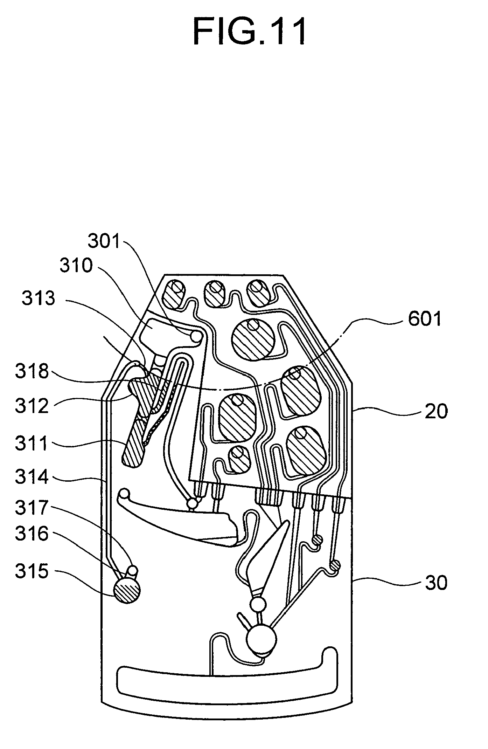

Figs. 11 to 17 show a state, in which liquids flow in respective operations inside the gene analyzer 1. After whole blood 501 is injected, the holding disk 12 is rotated by the motor 11. The whole blood injected into the sample vessel 310 is caused by the action of a centrifugal force generated by rotation of the holding disk 12 to flow toward the outer peripheral side to fill a hemocyte storage vessel 311 and a serum quantification vessel 312, and surplus whole blood flows to a whole blood waste vessel 315 through a wide overflow passage 314 from a narrow overflow passage 313 (Fig. 11). A whole blood waste vent flow path 316 is provided on the whole blood waste vessel 315 to enable an air to freely go in and out through a whole blood waste vessel vent hole 317. Since a connection part from the narrow overflow passage 313 to the wide overflow passage 314 is suddenly enlarged and disposed on an innermost peripheral side (a radial position 601) of the narrow overflow passage 313, the whole blood runs out in a state of filling the narrow overflow passage 313. Accordingly, any liquid cannot exist on an inner peripheral side of the radial position 601, so that liquid level in the serum quantification vessel 312 coincides with the radial position 601. Also, the whole blood flows into a serum capillary tube 318 branching from the serum quantification vessel 312, and an innermost peripheral portion of the whole blood also coincides with the radial position 601.

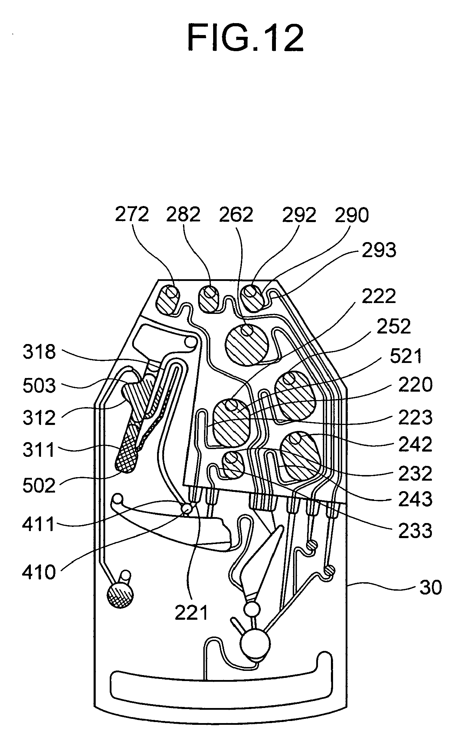

When rotation continues further, the whole blood 501 separates into hemocyte and serum (centrifugal separation), hemocyte 502 moves to the hemocyte storage vessel 311 on the outer peripheral side, and only serum 503 remains in the serum quantification vessel 312 (Fig. 12).

When the above described series of serum separating operations are conducted, vent holes 222, 232, 242, 252, 262, 272, 282, 292 of the respective reagent vessels in the reagent cartridges 20 are covered by the reagent cartridge cover 22 (Fig. 5) to be put in a state, in which entry of an air is inhibited. While respective reagents are liable to flow out from outer peripheral sides of the reagent vessels due to the centrifugal force, pressures in the reagent vessels drop since no air enters the vessels, so that the reagents cannot flow out balancing with the centrifugal force. When the rotating speed increases and the centrifugal force increases, however, pressures in the reagent vessels gradually drop and bubbles are generated when the pressures become equal to or lower than saturation vapor pressures of the reagents. Hereupon, a flow-path construction (return flow paths 223, 233, 243, 253, 263, 273, 283, 293), by which the reagents flowing out from the outer peripheral sides of the respective reagent vessels are once returned to inner peripheral sides, is provided as shown in Fig. 12 to suppress pressure drop in the reagent vessels to prevent generation of bubbles. In this manner, at the time of serum separating operation, the respective reagents are held in the reagent vessels and do not flow.

There is possibility that bubbles are generated even when pressures in the return flow paths become equal to or lower than the saturation vapor pressures. When bubbles are generated in the flow paths, there is possibility that the bubbles split the liquid flow in the course of outflowing of the reagents and the liquids remain in the reagent vessels. In the case where the reagents continuously flow in the flow paths, the action of a centrifugal force causes liquids on downstream sides of the flow paths to draw liquids on upstream sides in the flow paths downstream of innermost peripheral portions of the return flow paths, so that pressures become minimum in the innermost peripheral portions of the return flow paths.

For example, in the case where a first washing solution 541 flows out from a first washing solution outlet 241 through a first washing solution return flow path 243, pressure P40 in the innermost peripheral portion of the return flow path is represented by the following formula.

$$P40 = P41 - (1/2)\rho4(r4^2 - R4^2)\omega4^2$$

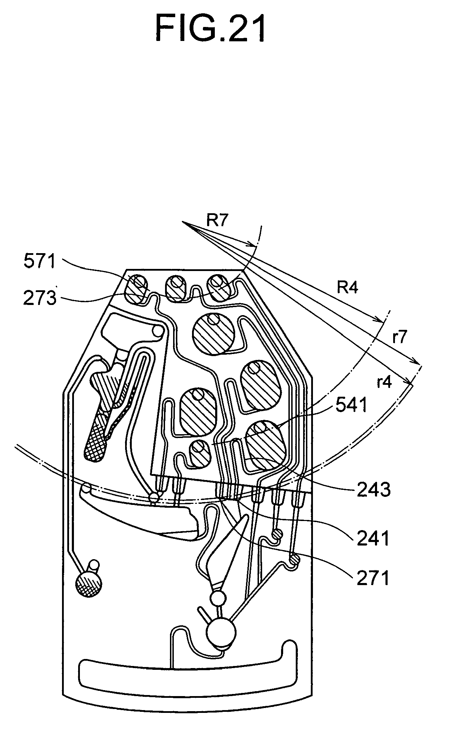

where P41 indicates pressure at the first washing solution outlet, $\rho4$ density of the first washing solution, r4 and R4, respectively, a radius of the first washing solution outlet and a radius of the innermost peripheral portion of the first washing solution return flow path (see Fig. 21), and $\omega4$ an angular speed of rotation. Likewise, in the case where an eluant 571 flows out from an eluant outlet 271 through an eluant return flow path 273, pressure P70 in the innermost peripheral portion of the return flow path is represented by the following formula.

$$P70 = P71 - (1/2)\rho7(r7^2 - R7^2)\omega7^2$$

where P71 indicates pressure at the eluant outlet, $\rho7$ density of the eluant, r7 and R7, respectively, a radius of the eluant outlet and a radius of the innermost peripheral portion of the eluant return flow path (see Fig. 21), and $\omega7$ an angular speed of rotation.

The radius r4 of the first washing solution outlet and the radius r7 of the eluant outlet are substantially the same in length. The radius R7 of the innermost peripheral portion of the eluant return flow path, on an inner peripheral side of which is provided a reagent storage part, is smaller than the radius R4 of the innermost peripheral portion of the first washing solution return flow path, on an outer peripheral side of which is provided a reagent storage part. Therefore, the eluant (pressure P70) becomes lower in pressure than the first washing solution (pressure P40) in case of an angular speed of rotation being the same, so that pressure at the innermost peripheral portion of the return flow path is liable to become equal to or lower than a saturation vapor pressure in the innermost peripheral portion of the eluant return flow path rather than at the innermost peripheral portion of the first washing solution return flow path. Therefore, in the case where the eluant 571 present toward the center of rotation relative to the first washing solution 541 is caused to flow, it is desired that by making the angular speed of rotation ($\omega7$) when the eluant is caused to flow, smaller than the angular speed of rotation ($\omega4$) when the first washing solution is caused to flow, pressure at the innermost peripheral portion of the return flow path be prevented from becoming equal to or lower than the saturation vapor pressure.

When the analysis module 2 is rotated for a predetermined period of time and the serum separating operation is terminated, the analysis module 2 is stopped, and surface tension causes a part of serum 503 in the serum quantification vessel 312 to flow into the serum capillary tube 318 due to capillary action to flow to a mixing part inlet 411, which defines a connection part of a mixing part 410 and the serum capillary tube 318, and to fill the serum capillary tube 318. Then the perforator 13 peforates vent holes one by one upstream of the respective reagent vessels and the motor 11 is rotated to flow the respective reagents by the centrifugal force.

Operations after the serum separation will be described hereinafter. A lysis reagent 521 for lysis of viral membrane protein in the serum has been dispensed to the lysis reagent vessel 220. When the motor 11 is rotated after the perforator 13 perforates the vent hole 222, the action of a centrifugal force causes the lysis reagent 521 to flow into the mixing part 410 through the solution return flow path 223 from the solution vessel 220. The embodiment shows an example, in which a solution joins serum after it flows to a side of an analysis cartridge from a side of a reagent cartridge.

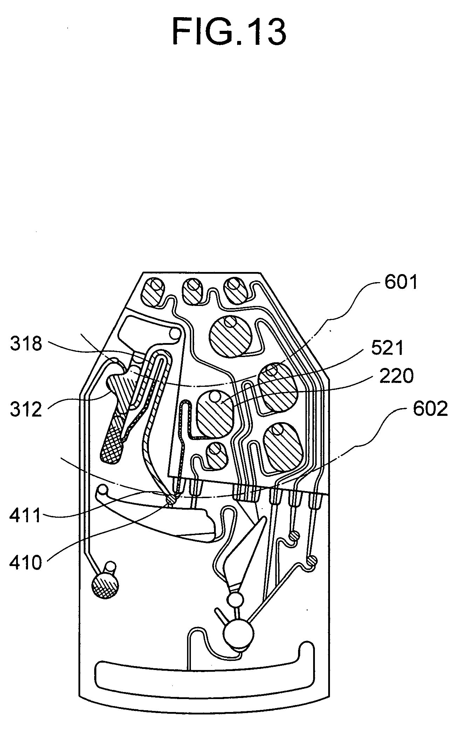

Since an innermost peripheral side (the radial position 601 at the termination of serum separation) of serum in the serum quantification vessel 312 is disposed on an inner peripheral side of the mixing part inlet 411 (a radial position 602), pressure head produced by the centrifugal force causes serum in the serum quantification vessel 312 and the serum capillary tube 318 to flow into the mixing part 410 from the mixing part inlet 411 (Fig. 13). While the mixing part 410 defines a space, in which a solution and serum are mixed together, mixing may be accelerated by forming the mixing part from a member, in which a solution and serum are mixed together. The member comprises, for example, a porous filter made of resin, glass, paper, etc., or fiber, a projection of silicon, metal, etc., manufactured by etching, machining, or the like.

As shown in Figs. 3 and 4, or 5, the reagent inlet 321 (391 in Fig. 5) on the analysis cartridge is larger in flow path cross section than the reagent outlet 221 (291 in Fig. 5) on the reagent cartridge, so that a lysis reagent flowing out from the reagent cartridge flows without being stemmed at the reagent inlet of the analysis cartridge, and does not leak from the connection part of the reagent cartridge and the analysis cartridge.

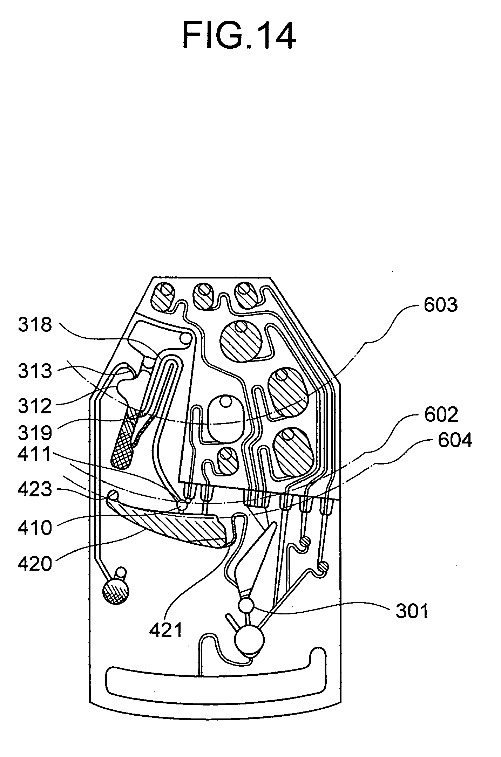

Serum and a lysis reagent mix together in the mixing part 410 to flow into a reaction vessel 420 (Fig. 14). The reaction vessel 420 is provided with a reaction vessel vent hole 423 to enable an air to freely go in and out. Since a branch part 319 (a radial position 603) from the serum quantification vessel 312 to the serum capillary tube 318 is disposed on an inner peripheral side of the mixing part inlet 411 (a radial position 602), all serum in the serum capillary tube 318 flows out into the mixing part 410 owing to the siphon action. On the other hand, since serum in the serum quantitative determination vessel 312 is caused by a centrifugal force to flow into the serum capillary tube 318, serum continues to flow out into the mixing part 410 until liquid level of serum in the serum quantification vessel 312 reaches the branch part 319 (the radial position 603), and an air is mixed into the serum capillary tube 318 to terminate flowing when the serum capillary tube becomes empty. That is, serum present in the serum quantification vessel 312, the narrow overflow passage 313, and the serum capillary tube 318 from the radial position 601 at the termination of serum separation to the radial position 603 flows out into the mixing part 410 to mix with a lysis reagent.

In this manner, by designing so that the serum quantification vessel 312, the narrow overflow passage 313, and the serum capillary tube 318 have a predetermined volume (a necessary quantity of serum) from the radial position 601 to the radial position 603, serum used for analysis can be quantified even when a ratio of serum to whole blood is different every whole blood sample. For example, when designing so that a hemocyte storage vessel has a volume of 250 microliter, a necessary quantity of serum is 200 microliter, in the case where whole blood of 500 microliter is dispensed, whole blood of 50 microliter overflows to the whole blood waste vessel 315, the remaining whole blood of 450 microliter separates into serum and hemocyte, and serum of 200 microliter out of the separated serum flows out into the mixing part 410. That is, the device according to the invention enables analysis of a whole blood sample, of which serum has a quantity of at least 200 microliter, for whole blood of 450 microliter. In case of whole blood, in which serum is small in ratio, it is sufficient to increase a hemocyte storage vessel in volume to increase a whole blood sample.

Serum and a lysis reagent having been mixed with each other react in the reaction vessel 420. Since liquid level in the reaction vessel 420 after a mixed liquid of serum and a lysis reagent have flowed into the reaction vessel 420 is disposed on an outer peripheral side of an innermost peripheral portion (a radial position 604) of a reaction-liquid flow path 421, it cannot go beyond the innermost peripheral portion of the reaction-liquid flow path 421 and the mixed liquid is held in the reaction vessel 420 during rotation.

The lysis reagent act to lyse membrane of viruses, bacteria, etc. in serum to elute a nucleic acid, and further facilitates adsorption of the nucleic acid to a nucleic-acid bonding member 301. As such reagent, it suffices to use guanidine hydrochloride for elution and adsorption of DNA and guanidine thiocyanate for RNA, and as such nucleic-acid bonding member, it suffices to use a porous material such as quartz and glass, fiber filter, etc.

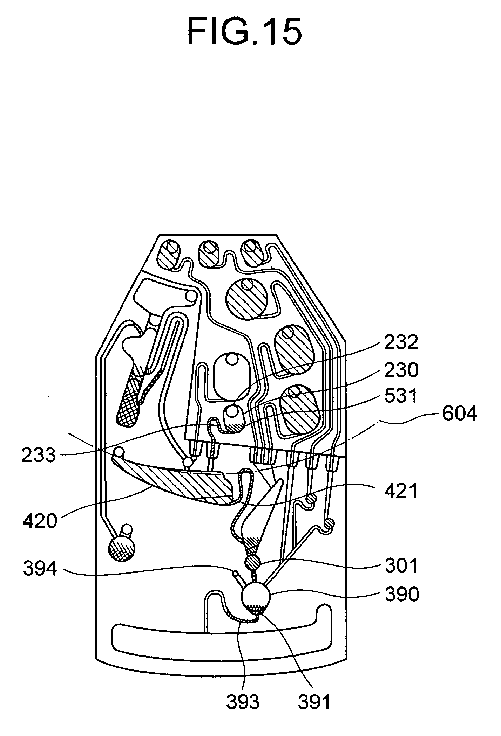

When after the serum and the lysis reagent are held in the reaction vessel 420, the motor 11 is stopped, the perforator 13 perforates the additional-liquid vent hole 232, through which an air is supplied to the additional-liquid vessel 230, and the motor 11 is again rotated, the action of a centrifugal force causes an additional liquid 531 to flow into the reaction vessel 420 through the additional-liquid return flow path 233 from the additional-liquid vessel 230 to move liquid level of the mixed liquid in the reaction vessel toward the inner peripheral side (Fig. 15). When the liquid level reaches the innermost peripheral portion (the radial position 604) of the reaction-liquid flow path 421, the mixed liquid goes beyond the innermost peripheral portion of the reaction-liquid flow path to flow out and flows into the nucleic-acid bonding member 301. As the additional liquid, it suffices to use the lysis reagent described above.

In some cases, a mixed liquid has a good wettability to wall surfaces according to a sample and the mixed liquid flows in the reaction-liquid flow path 421 due to the capillary phenomenon in a stopped state, in which case there is no need for the additional liquid 531. In this manner, when the mixed liquid of serum and a solution passes through the nucleic-acid bonding member, the nucleic acid adsorbs to the nucleic-acid bonding member 301 and the liquid flows into the eluant recovery vessel 390.

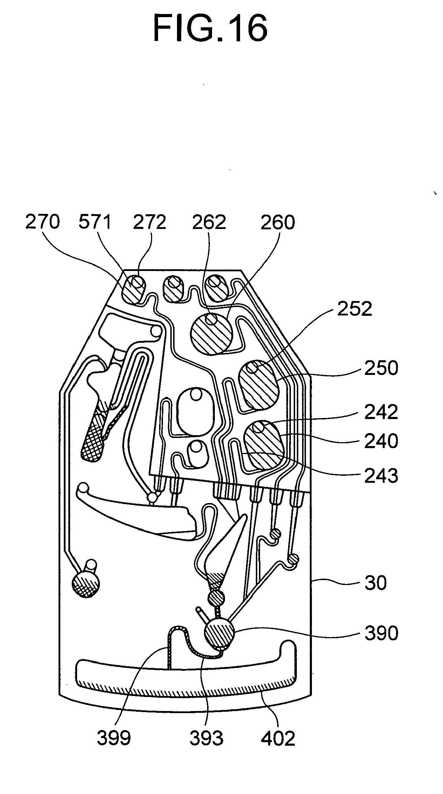

The eluant recovery vessel 390 is provided with an eluant recovery vessel vent hole 394 to enable an air to freely go in and out. While a waste liquid 391 after passed through the nucleic-acid bonding member 301 is once held in the eluant recovery vessel 390 due to the provision of a waste-liquid return flow path 393 in the same manner as in the mixing vessel 420, the eluant recovery vessel 390 is sufficiently small in capacity as compared with a volume of the waste liquid, so that the waste liquid goes beyond an innermost peripheral side of the waste-liquid return flow path 393 to flow out into a waste-liquid storage vessel 402 through a waste-liquid outflow path 399 (Fig. 16).

Subsequently, when the motor 11 is again rotated after the motor 11 is stopped and the perforator 13 perforates the first washing-solution vent hole 242, through which an air is supplied to the first washing-solution vessel 240, the action of a centrifugal force causes the first washing solution to flow into the nucleic-acid bonding member 301 through the first washing solution return flow path 243 from the first washing-solution vessel 240 to wash unnecessary components, such as protein, etc., adhering to the nucleic-acid bonding member 301. As the first washing solution, it suffices to use the lysis reagent described above, or a liquid obtained by reducing the solution in salt level. A waste liquid after washing flows out into the waste-liquid storage vessel 402 through the eluant recovery vessel 390 in the same manner as the mixed liquid described above.

The same washing operation is repeated plural times. For example, following the first washing solution, the perforator 13 perforates the second washing-solution vent hole 252, through which an air is supplied to the second washing-solution vessel 250, in a state, in which the motor is stopped, and the motor 11 is again rotated to wash unnecessary components, such as salt, etc., adhering to the nucleic-acid bonding member 301. As a second washing reagent, it suffices to use, for example, ethanol, or an ethanol water solution.

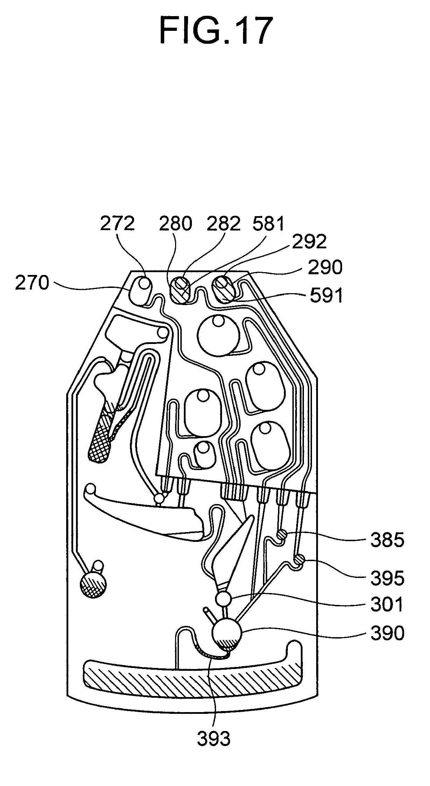

Likewise, a lid of the third washing-reagent vent hole 262, through which an air is supplied to the third washing-reagent vessel 260, is perforated. A third washing reagent flows directly into the eluant recovery vessel 390 to wash unnecessary components, such as ethanol, etc., adhering to the eluant recovery vessel 390. As the third washing solution, it suffices to use, for example, sterilized water and a water solution adjusted to 9 from 7 in pH. In this manner, after the nucleic-acid bonding member 301 and the eluant recovery vessel 390 are washed, the procedure shifts to the processes of elution, amplification, and detection of a nucleic acid (Fig. 17).

More specifically, the perforator 13 perforates a lid of the eluant vent hole 272, through which an air is supplied to the eluant vessel 270, is perforated in a state, in which the motor is stopped, and the motor 11 is again rotated to cause the eluant 571 to flow to the nucleic-acid bonding member 301 (Fig. 17). The eluant is one, which elutes a nucleic acid from the nucleic-acid bonding member 301, and suffices to use water or a water solution adjusted to 9 from 7 in pH. In particular, in order to facilitate elution, heating to at least 40 degrees is desirable. It suffices to use the heating device 14, shown in Fig. 1, for heating and to irradiate light from above the eluant recovery vessel 390. An eluant recovered by eluting a nucleic acid is smaller in volume than the eluant recovery vessel 390, so that it cannot go beyond the innermost peripheral side of the waste-liquid return flow path 393 and so is held in the eluant recovery vessel.

Here, independent flow paths are preferably formed to extend to an end of the reagent cartridge to permit the first or second washing solution and the eluant to join together in the analysis cartridge. This serves to suppress contamination or the like. The flow paths on the reagent cartridge, among the flow paths, which extend from the eluant vessel to the nucleic-acid bonding member 301, are formed to be larger in length than the flow paths on the analysis cartridge. Alternatively, the flow paths on the reagent cartridge, among the flow paths, which extend from the washing-solution vessels to the nucleic-acid bonding member 301, are formed to be larger in length than the flow paths on the analysis cartridge.

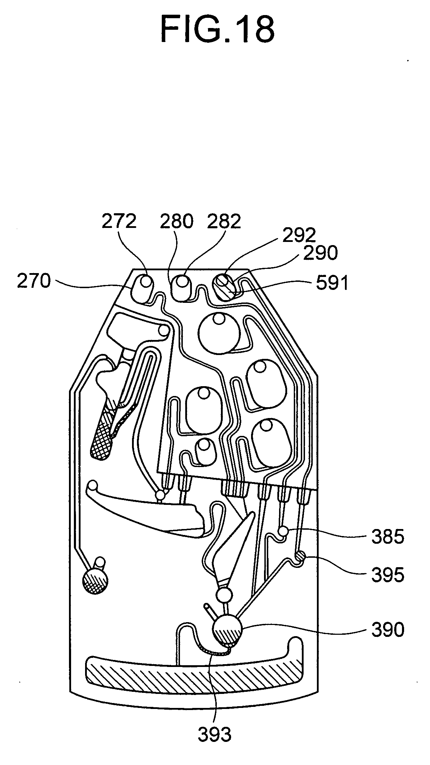

Subsequently, the perforator 13 perforates the amplification liquid vent hole 282, through which an air is supplied to the amplification liquid storage vessel 280, in a state, in which the motor is stopped, and the motor 11 is again rotated to cause an amplification liquid 581 to flow (Fig. 18). The amplification liquid 581 together with an amplification reagent flows into the eluant recovery vessel 390 through an amplification reagent vessel 385, in which a dry amplification reagent is accommodated, and mixes with an eluant, from which a nucleic acid is eluted. The amplification reagent is one that amplifies a nucleic acid, and contains deoxynucleoside triphosphate. The heating device 14 is used according to the amplification method to irradiate light from above the eluant recovery vessel 390 to heat the same to amplify a nucleic acid in the eluant recovery vessel 390.

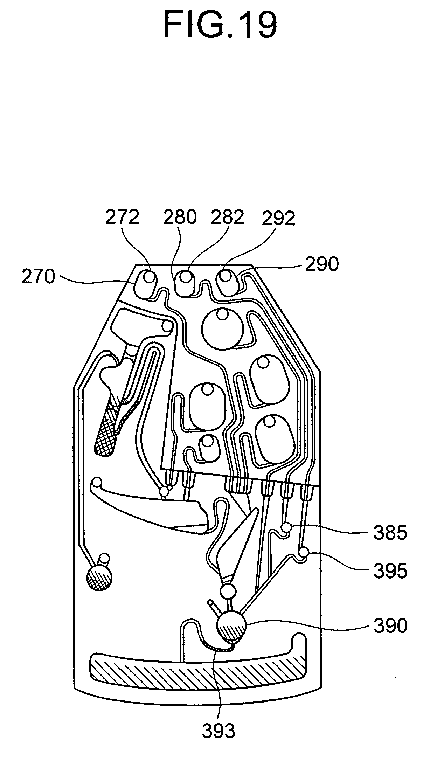

Subsequently, the perforator 13 perforates the detection liquid vent hole 292, through which an air is supplied to the detection liquid storage vessel 290, in a state, in which the motor is stopped, and the motor 11 is again rotated to cause an detection liquid 591 to flow (Fig. 19). The detection liquid 591 together with a detection reagent flows into the eluant recovery vessel 390 through a detection reagent vessel 395, in which a dry detection reagent is accommodated, and mixes with the amplification liquid. The detection reagent contains a fluorescent reagent, etc. Subsequently, the detection device 15 is moved onto the eluant recovery vessel 390 to detect, for example, an amount of fluorescence.

For example, the flow paths on the reagent cartridge, among the flow paths, which extend from the amplification liquid storage vessel 280 to the eluant recovery vessel, are formed to be larger in length than the flow paths on the analysis cartridge. Also, the flow paths on the reagent cartridge, among the flow paths, which extend from a detection liquid vessel 290 to the eluant recovery vessel, are formed to be larger in length than the flow paths on the analysis cartridge. Preferably, a combined part of supply flow paths for the washing solution and the amplification liquid, which are supplied to the eluant recovery vessel, or further the detection liquid is disposed on a side of the analysis cartridge. This serves to inhibit contamination and effectively provide for the reaction.

According to the invention, any dispensing operation of reagents with dispensers becomes unnecessary and there is no fear of contamination of reagents due to a defective work. Also, there is no need of providing a valve for control of flow of respective reagents midway flow paths, generation of residual liquids in valve parts midway flow paths is eliminated, contamination by reagents in proceeding processes can be prevented, and specific components such as a nucleic acid, etc. in a liquid sample can be extracted with high purity to achieve an analysis with high accuracy.

Also, according to the invention, since reagent cartridges are supplied separately from analysis cartridges, only reagent cartridges can be prepared according to items of analysis, for example, in the case where reagents are different in quantity according to items of analysis, and analysis cartridges can be used in common, so that reduction in manufacturing cost can be achieved.

Only reagent cartridges must be preserved every item of analysis and it suffices to hold analysis cartridges in small number, thus enabling decreasing a space for preservation. In particular, in the case where temperature control of reagents is necessary, temperature control of only reagent cartridges suffices, so that it is possible to decrease a space required for temperature control. Since analysis cartridges can be used independently even when reagents cause inconvenience due to stoppage of power supply or the like, it suffices to purchase only reagent cartridges, which is economical.

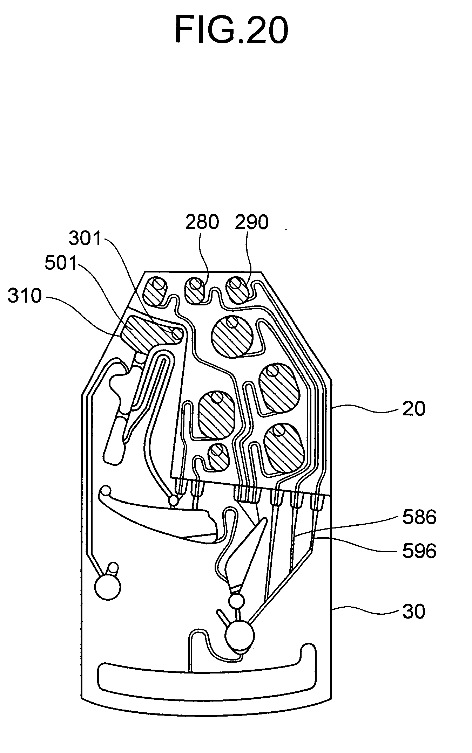

According to the embodiment shown in Fig. 10, there are provided the amplification reagent vessel 385, in which a dry amplification reagent is accommodated, and a detection reagent vessel 395, in which a dry detection reagent is accommodated. However, a freeze-dried amplification reagent 586 and a freeze-dried detection reagent 596 may be held on surfaces of flow paths downstream of the amplification liquid storage vessel 280 and the detection liquid storage vessel 290, respectively, as shown in Fig. 20. For example, when liquid reagents before freeze drying are dispensed into the flow paths and are freeze-dried together with cartridges, the reagents can be quantified in a liquid state, so that it is possible to hold predetermined quantities of the reagents with high accuracy. Also, since dry reagents can be distributed thinly and evenly in the flow paths, the dry reagents can be dissolved only by having liquid reagents (581 and 591) for dissolution of dry reagents, so that an operation of agitation at the time of dissolution becomes unnecessary.

In this manner, an analyzer of high performance can be provided effectively by making use of reagent cartridges, in which reagents, etc. are beforehand stored, and analysis cartridges formed with flow paths.

While all respective reagents in the embodiment shown in Fig. 2 are stored in the integral reagent cartridge 20, low temperature preservation is necessary according to an amplification reagent. Hereupon, it suffices that an amplification reagent cartridge being a separate cartridge only for an amplification reagent vessel be separated from the reagent cartridge 20 and only the amplification reagent cartridge be under temperature control according to demand.

Specifically, a reagent for amplification, in particular, containing enzyme is preserved in an amplification cartridge at a temperature of the order of minus 20°C, and an extraction reagent, a fluorescent reagent for detection, etc. are preserved in the reagent cartridge 20 at room temperature. A reagent, such as enzyme for amplification, etc., for which low temperature preservation is necessary, is small in quantity, and so an amplification reagent cartridge is small as compared with the reagent cartridge 20. Since a space for a low temperature preservation box is not exclusively provided, it is advantageous to make the amplification reagent cartridge and the reagent cartridge 20 independent from each other. Also, according to the invention, reagent cartridges, which must be differently temperature-controlled, can be put separately under temperature control, so that it is possible to simplify adjustment of reagents.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A chemical analyzer (1) comprising: an accommodation part (12) that accommodates a structure (2), in which a sample is injected and a reagent is stored, and which has a reaction region, in which the sample and the reagent react with each other; and a detection mechanism (15) for the sample after reaction, wherein
   said structure (2) comprises: a reagent cartridge (20) provided with a reagent storage part (220, 230, 240, 250, 260, 270, 280, 290) that stores the reagent; and an analysis cartridge (30) comprising a connection part, to which said reagent cartridge (20) is connected, a reagent flow path, through which the reagent flows, a sample flow path, through which the sample flows, and the reaction region (420) communicated to the reagent flow path and the sample flow path, and
   a side surface of said reagent cartridge (20) and a side surface of said analysis cartridge (30) are formed to be connectable through the connection part in a state of being arranged in opposite to each other.

2. A chemical analyzer according to claim 1, wherein said analysis cartridge (30) at the connection part is larger in reagent flow path cross sectional area than said reagent cartridge (20).

3. A chemical analyzer according to claim 1 or 2, wherein said structure (2) is rotatably mounted on the accommodation part (12), and an angular speed of rotation, at which a reagent in the reagent storage part (220, 230, 240, 250, 260, 270, 280, 290) closer to a center of rotation is caused to flow out, is larger than an angular speed of rotation, at which a reagent in the reagent storage part (220, 230, 240, 250, 260, 270, 280, 290) away from the center of rotation is caused to flow out, in the reagent cartridge (20).

4. A chemical analyzer according to any of claims 1 to 3, wherein in a state, in which said reagent cartridge (20) and said analysis cartridge (30) are mounted on the accommodation part (12), there is formed a space, in which a first reagent storage part (220, 230, 240, 250, 260, 270, 280, 290) and a second reagent storage part (220, 230, 240, 250, 260, 270, 280, 290) in said reagent cartridge (20) are communicated to each other through the reagent flow path or the sample flow path formed on said analysis cartridge (30).

5. A chemical analyzer according to any of claims 1 to 4, wherein said structure (2) is rotatably mounted on the accommodation part (12), and said reagent cartridge (20) or said analysis cartridge (30) is formed so that a plurality of side surfaces thereof are arranged along a direction close to a direction of rotation rather than a direction perpendicular to the direction of rotation, and one of said side surfaces is formed to be closer to the center of rotation than the other of the side surfaces.

6.  A chemical analyzer comprising: an accommodation part (12) that accommodates a structure (2), in which a sample is injected, and a reagent is stored, and which has a reaction region, in which the sample and the reagent react with each other; and a detection mechanism (15) for the sample after reaction,
    wherein said structure (2) is rotatably mounted on said accommodation part (12) and comprises a reagent cartridge (20) provided with a reagent storage part (220, 230, 240, 250, 260, 270, 280, 290) that stores a reagent, and an analysis cartridge (30) comprising a connection part, to which said reagent cartridge (20) is connected, a reagent flow path, through which the reagent flows, a sample flow path, through which the sample flows, and the reaction region communicated to the reagent flow path and the sample flow path, and
    said reagent cartridge (20) and said analysis cartridge (30) comprise a plurality of side surfaces closer to a direction along a direction of rotation than to a direction perpendicular to the direction of rotation,
    one out of said side surfaces is formed in a position closer to a center of rotation than the other side surfaces are.

7.  A structure for chemical analysis, comprising: an introduction part for a sample containing a specific chemical substance; a reagent storage part (220, 230, 240, 250, 260, 270, 280, 290) that stores a reagent to be caused to react with the sample; and a capturing part that captures the chemical substance from the reagent having been caused to react with the sample,
    said structure (2) further comprising: a reagent cartridges (20) provided with a reagent storage part (220, 230, 240, 250, 260, 270, 280, 290) that stores a plurality of reagents; and an analysis cartridge (30) comprising a connection part, to which said reagent cartridge (20) is connectable, a reagent flow path, through which the reagent flows, a sample flow path, through which the sample flows, and a reaction region, to which the reagent flow path and the sample flow path are communicated to each other, wherein
    a side surface of said reagent cartridge (20) and a side surface of said analysis cartridge (30) are formed to be connectable through the connection part in a state of being arranged in opposite to each other.

8.  A flow path structure comprising: a connection part connectable to a reagent structure (20) provided with a reagent storage part (220, 230, 240, 250, 260, 270, 280, 290) that stores a reagent; a reagent flow path, through which the reagent supplied through the connection part flows; a sample flow path, through which a sample containing a specific chemical substance flows; a reaction region, to which said reagent flow path and said sample flow path are communicated; and a capturing part that captures the chemical substance in the sample having been caused to react with the reagent, wherein
    said connection part is formed to be connectable in a state, in which a side surface thereof and a side surface of the reagent structure (20) are arranged in opposite to each other.

9.  A flow path structure comprising: a connection part constructed to be connectable to a reagent structure provided with a reagent storage part (220, 230, 240, 250, 260, 270, 280, 290) that stores a reagent, and supplied with a reagent from the reagent storage part; an injection port, through which a sample containing a specific chemical substance is injected; a separation part, in which a separated sample containing a nucleic acid which is an object for analysis is separated from a sample injected from the injection port; a first reaction part, in which a first reagent supplied from a first connection part and the separated sample are introduced to react together; a nucleic acid capturing part that captures the nucleic acid from the separated sample having reacted; a washing solution flow path, through which a washing solution supplied from a second connection part is conducted to the nucleic acid capturing part; an elution reagent flow path, through which an elution reagent supplied from a third connection part is conducted to the nucleic acid capturing part; and a holding part that holds the nucleic acid as eluted, and
    said connection part is formed to be connectable in a state, in which a side surface thereof and a side surface of said reagent structure are arranged in opposite to each other.

10. A reagent structure (20) comprising: a connection part formed to be connectable to a flow path structure (30) comprising a reagent flow path, through which a reagent flows down, a sample flow path, through which a sample containing a specific chemical substance flows down, and a reaction region, to which the reagent flow path and the sample flow path are communicated; a reagent storage part (220, 230, 240, 250, 260, 270, 280, 290) that stores the reagent; a flow path, through which the stored reagent is conducted to the flow path structure (30), and
    said connection part is formed to be connectable in a state, in which a side surface thereof and a side surface of said flow path structure are arranged in opposite to each other.

# FIG. 1

# FIG. 2

# FIG. 3

# FIG. 4

# FIG. 5

# FIG. 6

# FIG. 7

| DISPENSE WHOLE BLOOD |
| REMOVE PROTECTIVE SHEET |
| MOUNT REAGENT CARTRIDGE |
| MOUNT ANALYSIS MODULE |
| OPERATE GENE ANALYZER |
| END |

# FIG. 8

```
ROTATE DISK
    ├── SEPARATE SERUM
STOP DISK
CAPILLARY - FLOW SERUM
PERFORATE SOLUTION VENT HOLE
ROTATE DISK
    ├── MIXING
STOP DISK
PERFORATE ADDITIONAL LIQUID VENT HOLE
ROTATE DISK
    ├── BONDING
STOP DISK
PERFORATE FIRST WASHING SOLUTION VENT HOLE
```

```
ROTATE DISK
    ├── WASHING
STOP DISK
PERFORATE ELUANT VENT HOLE
ROTATE DISK
    ├── ELUTION
STOP DISK
PERFORATE AMPLIFICATION LIQUID VENT HOLE
ROTATE DISK
    ├── AMPLIFICATION
STOP DISK
PERFORATE DETECTION LIQUID VENT HOLE
ROTATE DISK
    ├── DETECTION
END
```

# FIG. 9

SEPARATE SERUM

FLOW WHOLE BLOOD
↓
SEPARATE SERUM

WASHING

FLOW WASHING SOLUTION
↓
PASS(WASH) THROUGH NUCLEIC-ACID BONDING MEMBER OR ELUANT RECOVERY VESSEL
↓
FLOW TO WASTE LIQUID PART

MIXING

QUANTIFY FLOW SERUM FLOW LYSIS REAGENT
↓
MIX SERUM· LYSIS REAGENT
↓
REACT SERUM· LYSIS REAGENT

ELUTION

FLOW ELUANT
↓
PASS(ELUTE) THROUGH NUCLEIC-ACID BONDING MEMBER OR ELUANT RECOVERY VESSEL
↓
HOLD ELUANT

AMPLIFICATION

FLOW AMPLIFICATION LIQUID
↓
MIX ELUANT· AMPLIFICATION LIQUID
↓
AMPLIFY NUCLEIC ACID

BONDING

FLOW ADDITIONAL LIQUID
↓
FLOW MIXED LIQUID
↓
PASS(BOND) THROUGH NUCLEIC-ACID BONDING MEMBER
↓
FLOW TO WASTE LIQUID PART

DETECTION

FLOW DETECTION LIQUID
↓
MIXING
↓
DETECTION

# FIG.10

# FIG.11

# FIG.12

# FIG.13

# FIG.14

# FIG.15

# FIG.16

# FIG.17

# FIG.18

# FIG.19

# FIG.20

# FIG.21

**European Patent Office**

**EUROPEAN SEARCH REPORT**

Application Number

EP 05 02 1543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 4 940 527 A (KAZLAUSKAS ET AL)<br>10 July 1990 (1990-07-10)<br><br>* column 2, line 25 - line 31 *<br>* column 2, line 64 - line 68; figure 1 *<br>* columns 9,10; claims 1,9 *<br>----- | 1-8,10<br><br>9 | G01N35/00<br>G01N35/08<br>B01L3/00<br>G01N35/02 |
| P,X | EP 1 464 398 A (HITACHI HIGH-TECHNOLOGIES CORPORATION) 6 October 2004 (2004-10-06)<br>* paragraphs [0009], [0016], [0018], [0034]; figures 1,2 *<br>----- | 1,3-10 | |
| X<br>A | US 4 654 127 A (BAKER ET AL)<br>31 March 1987 (1987-03-31)<br>* column 3, line 59 - line 68; figures 5,7,8 *<br>----- | 1<br>2-10 | |
| Y<br><br>A | EP 1 459 795 A (HITACHI HIGH-TECHNOLOGIES CORPORATION)<br>22 September 2004 (2004-09-22)<br>* paragraph [0049] *<br>* paragraphs [0007] - [0013] *<br>* figures 1-3 *<br>----- | 9<br><br>1-10 | |
| A | US 4 857 274 A (SIMON ET AL)<br>15 August 1989 (1989-08-15)<br>* abstract *<br>----- | 1-10 | TECHNICAL FIELDS SEARCHED (IPC)<br><br>G01N<br>B01L |

The present search report has been drawn up for all claims

| Place of search | Date of completion of the search | Examiner |
|---|---|---|
| Munich | 16 December 2005 | Hoyal, B |

EPO FORM 1503 03.82 (P04C01)

**ANNEX TO THE EUROPEAN SEARCH REPORT
ON EUROPEAN PATENT APPLICATION NO.**                EP 05 02 1543

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2005

| Patent document cited in search report | | Publication date | Patent family member(s) | | Publication date |
|---|---|---|---|---|---|
| US 4940527 | A | 10-07-1990 | NONE | | |
| EP 1464398 | A | 06-10-2004 | CN | 1542454 A | 03-11-2004 |
| | | | JP | 2004309145 A | 04-11-2004 |
| | | | US | 2004197233 A1 | 07-10-2004 |
| US 4654127 | A | 31-03-1987 | NONE | | |
| EP 1459795 | A | 22-09-2004 | AU | 2002219551 A1 | 30-07-2003 |
| | | | WO | 03059484 A1 | 24-07-2003 |
| | | | US | 2005095172 A1 | 05-05-2005 |
| US 4857274 | A | 15-08-1989 | AU | 590858 B2 | 16-11-1989 |
| | | | AU | 7447087 A | 07-01-1988 |
| | | | CN | 87104475 A | 27-01-1988 |
| | | | DE | 3764412 D1 | 27-09-1990 |
| | | | EP | 0251946 A1 | 07-01-1988 |
| | | | FR | 2600775 A1 | 31-12-1987 |
| | | | JP | 63259464 A | 26-10-1988 |

EPO FORM P0459

For more details about this annex : see Official Journal of the European Patent Office, No. 12/82